# EUROPEAN PATENT SPECIFICATION

(11) **EP 1 926 606 B1**
(45) Date of publication and mention of the grant of the patent: **16.12.2009**
(21) Application number: 06796287.8
(22) Date of filing: 14.09.2006
(51) Int. Cl.: B60B 21/06, B60B 1/04, B60B 1/02

(54) **METHOD FOR THE MANUFACTURE OF A WIRE WHEEL AND A WHEEL OBTAINED BY THAT METHOD**
VERFAHREN ZUR HERSTELLUNG EINES DRAHTRADS UND DURCH DAS VERFAHREN ERHALTENES RAD
PROCEDE DE FABRICATION D' UNE ROUE A RAYONS METALLIQUES ET ROUE OBTENUE PAR CE PROCEDE

(30) Priority: 21.09.2005 IT PD20050271
(43) Date of publication of application: 04.06.2008
(73) Proprietor: ALPINA RAGGI S.p.A., 23871 Lomagna (LC) (IT)
(72) Inventor: CAPPELLOTTO, Guido, I-20043 Arcore (IT); ALBERIO, Fabio, I-20092 Cinisello Balsamo (IT)
(74) Representative: Cantaluppi, Stefano
(86) International application number: PCT/IT2006/000659
(87) International publication number: WO 2007/049317

(56) References cited:
- EP-A- 1 209 006
- EP-A2- 1 502 768
- WO-A-2005/058613
- JP-A- 60 038 201
- US-A1- 2003 230 928
- US-A1- 2004 155 518

## Description

### Technical field of the invention

The subject of the present invention is a method for the manufacture of a wire wheel and a wheel obtained by said method.

### State of the art

The invention refers in particular to the production of wheels of the type comprising a rim and a hub secured to each other by means of a plurality of spokes, each including a stem at the opposed axial ends of which are arranged respective anchorage members capable of being secured respectively to the hub and to the rim, and wherein the member for anchorage to the rim is received in a seat fixed on the rim with the capability of limited axial displacement in said seat.

Wheels having such characteristics may be produced with characteristics suitable for the fitting of tubeless tyres, as is taught, for example, in Patent Application WO 2005/058613 of the same Applicant or also from EP 1 209 006, or EP 1 502 768.

The teaching is based on the fact that, in order to produce wheels suitable for the fitting of that type of tyre, it is necessary on the one hand to produce a gastight coupling between the spoke part which hooks onto the rim and the rim itself, and on the other hand it is necessary take into account the fact that the rim, in use, is subject to inevitable elastic deformation which must be transferred to, and/or absorbed by, the rim/spoke assembly without prejudicing the gastight seal.

### Description of the invention

The invention is placed in that context by providing a method for the manufacture of a wire wheel which makes it possible to produce such wheels in a simplified manner compared with the previous teachings of the same Applicant and with greater economy.

This problem is solved by the invention with a method and a wheel thus obtained which are implemented according to the claims which follow.

### Brief description of the drawings

The characteristics and advantages of the invention will become clearer from the detailed description of two preferred, but not exclusive, examples of application thereof, illustrated by way of non-limiting example with reference to the appended drawings, in which:
- Figure 1 is a partial diagrammatic view in longitudinal section of a first exemplary embodiment of a wire wheel according to the present invention;
- Figure 2 is a similar partial diagrammatic view in longitudinal section of a second exemplary embodiment of a wire wheel according to the invention.

### Preferred ways of implementing the invention

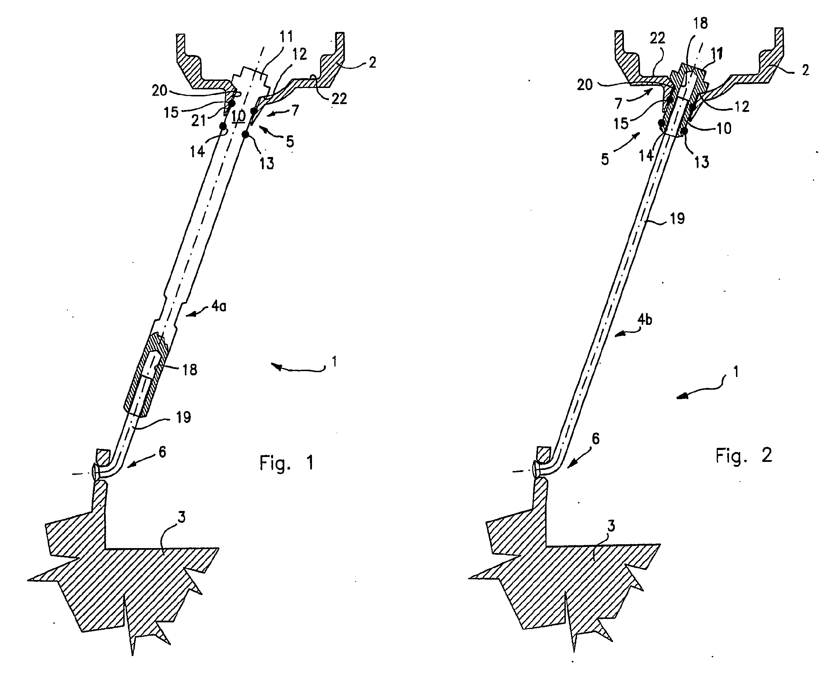

In the drawings, details that are analogous or technically equivalent are designated by the same reference numbers. The reference 1 indicates as a whole a wire wheel including a rim 2 and a hub 3 interconnected with each other by a plurality of spokes, indicated by 4a in Fig. 1 and by 4b in Fig. 2.

Both the spokes 4a and the spokes 4b comprise a predominantly longitudinal stem, at the longitudinally opposed ends of which are arranged respective means for anchorage to the rim 2 and to the hub 3, indicated in both cases by 5 and 6 respectively.

The two types of spokes 4a, 4b differ from each other in that in the first case the stem is produced integrally with the means 5 for anchorage to the rim 2, while in the second case it is produced integrally with the means 6 for anchorage to the hub 3.

In both cases, the means 5 for anchorage to the rim 2, and the corresponding complementary means 7 for anchorage on the rim itself, have an identical configuration.

The spoke 4a lends itself more to the production of spokes with a stem of light alloy, such as aluminium alloy and the like. The spoke 4b lends itself more to the production of spokes with a stem made of steel.

The means 5 for anchorage to the rim 2 comprise a cylindrical tang 10 with an operating key 11 at its free end, followed by an annular shoulder 12 against which bears a second shoulder formed by a snap ring 13 lodged in a corresponding seat 14. In an intermediate position between the shoulders 12, 13 a second seat is arranged for a sealing ring 15, for example of the O-ring type.

In the spoke 4a, the cylindrical tang 10 is extended to form the stem of the spoke itself and has at the opposite end a blind threaded hole 18 into which is screwed a terminal portion 19 having an elbowed head which constitutes the means 6 for anchorage to the hub 3.

In the spoke 4b, the cylindrical tang 10 is terminated without any extension and is axially pierced by the blind hole 18. In this case also, a portion 19 is provided which has a greater axial length than in the preceding example, being threaded and having the elbowed head. The elbowed head may be substituted by other means, which are known per se, for anchorage between spoke and hub.

The complementary means 7 for anchorage on the rim comprise a seat 20 provided integrally on the rim in the form of a substantially tubular appendage 21 and in which the cylindrical tang 10 is received in a sealed manner, guaranteed by the ring 15, with coupling of the cylinder/piston type, and also with the capability of axial displacement in the seat, limited by the two shoulders 12, 13. Normally, the shoulder 12 abuts against the root of the appendage 21 at the base of the channel 22 of the rim itself.

The tubular appendage 21 is obtained by localised deformation and drilling of the rim 2 at the channel 22. The deformation and drilling are preferably effected at the same time by drilling the rim with a fusion tip. This drilling method is known from various documents, for example EP0150518 or from www.flowdrill.com and involves a drilling tool coming into contact with the material to be drilled with a relatively high axial pressure and rotation speed. The heat generated renders the material soft and malleable so that it can be displaced by the drilling tool and transported in the feed direction so as to form, in the case in question, a cylindrical tubular appendage, tapered externally in a direction away from the rim.

Provision is made, however, for the tubular appendage to be obtainable by different techniques, essentially of hot or cold deformation of the rim in the region involved, such as deep-drawing or punching techniques, etc.

By means of the above-mentioned coupling, of the cylinder/piston type, between the rim and the corresponding anchorage member of the spoke, the rim can deform elastically in use without compromising the seal of the rim/spoke coupling, thus keeping the inflation chamber of the tyre gastight, thereby allowing the correct use of tyres without an air chamber (so-called "tubeless"). At the same time, the wheel can be produced in a simple manner, with high-speed processing and at low cost.

## Claims

1. A method for the manufacture of a wire wheel of the type comprising a rim (2) and a hub (3) secured to each other by means of a plurality of spokes (4a, 4b), each including a stem at the opposed axial ends of which are arranged respective anchorage members (5, 6) capable of being secured respectively to the hub and to the rim, and wherein the member (5) for anchorage to the rim is received in a seat (20) fixed on the rim with the capability of limited axial displacement in said seat (20), **characterized in that** said seat is provided integrally on the rim in the form of a substantially tubular appendage (21) thereof and said anchorage member (5) is received in a sealed manner with coupling of the cylinder/piston type in said tubular appendage, so that said sealed coupling is maintained in said axial displacement.

2. A method for the manufacture of a wire wheel according to claim 1, wherein said tubular appendage (21) is obtained by localised deformation and drilling of said rim (2) at a channel (22) thereof.

3. A method for the manufacture of a wire wheel according to claim 2, wherein said deformation and drilling are effected at the same time by drilling of said rim with a fusion tip.

4. A method for the manufacture of a wire wheel according to claim 1, 2 or 3 wherein stroke limiting means (12, 13) for said cylinder/piston coupling are provided on said anchorage member.

5. A method for the manufacture of a wire wheel according to one or more of claims 1 to 4, wherein said anchorage member comprises a cylindrical tang (10) slidable axially in a gastight manner in said seat (20), the gastight seal being obtained by means of at least one sealing ring (15) interposed between the tang and the seat.

6. A method for the manufacture of a wire wheel according to claim 5, wherein said sealing ring (15) is placed in an intermediate position between the stroke limiting means (12, 13).

7. A method for the manufacture of a wire wheel according to one or more of the preceding claims, wherein the outer surface of said tubular appendage is tapered in a direction away from the rim.

8. A method for the manufacture of a wire wheel according to one or more of the preceding claims, wherein said anchorage member (5) is provided integrally with said stem.

9. A wire wheel including a rim (2) and a hub (3) secured to each other by means of a plurality of spokes (4a, 4b), each including a stem at the opposed axial ends of which are arranged respective anchorage members (5, 6) capable of being secured respectively to the hub and to the rim, and wherein the member (5) for anchorage to the rim is received in a seat (20) fixed on the rim with the capability of limited axial displacement in said seat (20), **characterized in that** said seat is provided integrally on the rim (2) in the form of a tubular appendage (21) thereof and said anchorage member is received in a sealed manner with coupling of the cylinder/piston type in said tubular appendage, so that said sealed coupling is maintained in said axial displacement.

10. A wire wheel according to claim 9 and including one or more of the characteristics of claims 2 to 8.

## Patentansprüche

1. Verfahren zur Herstellung eines Drahtrads des Typs, welcher eine Felge (2) und eine Nabe (3) umfasst, welche aneinander mittels einer Mehrzahl von Speichen (4a, 4b) befestigt sind, welche jeweils einen Schaft beinhalten, an dessen entgegengesetzten axialen Enden entsprechende Verankerungselemente (5, 6) angeordnet sind, welche geeignet sind, jeweils an der Nabe und an der Felge befestigt zu werden, und wobei das Element (5) zum Verankern an der Felge in einem an der Felge fixierten Sitz (20) aufgenommen ist mit der Fähigkeit begrenzter axialer Verlagerung in dem Sitz (20), **dadurch gekennzeichnet, dass** der Sitz einstückig auf der Felge in der Form eines im Wesentlichen röhrenförmigen Fortsatzes (21) derselben bereitgestellt wird und das Verankerungselement (5) mit einer Kopplung vom Zylinder/Kolben-Typ in einer abgedichteten Weise in dem röhrenförmigen Fortsatz aufgenommen wird, so dass die abgedichtete Kopplung bei der axialen Verlagerung erhalten bleibt.

2. Verfahren zur Herstellung eines Drahtrads nach Anspruch 1, wobei der röhrenförmige Fortsatz (21) mittels örtlicher Deformation und Bohren der Felge (2) an einem Kanal (22) derselben erhalten wird.

3. Verfahren zur Herstellung eines Drahtrads nach Anspruch 2, wobei die Deformation und das Bohren gleichzeitig durch Bohren der Felge mit einer Schmelzspitze durchgeführt werden.

4. Verfahren zur Herstellung eines Drahtrads nach Anspruch 1, 2 oder 3, wobei an dem Verankerungselement eine Wegbegrenzungseinrichtung (12, 13) für die Zylinder/Kolben-Kopplung bereitgestellt wird.

5. Verfahren zur Herstellung eines Drahtrads nach einem oder mehreren der Ansprüche 1 bis 4, wobei das Verankerunaselment einen in dem Sitz (20) auf gasdichte Weise axial gleitbaren zylindrischen Zapfen (10) umfasst, wobei die gasdichte Dichtung mittels zumindest eines Dichtungsrings (15) erhalten wird, welcher zwischen dem Zapfen und dem Sitz eingefügt wird.

6. Verfahren zur Herstellung eines Drahtrads nach Anspruch 5, wobei der Dichtungsring (15) in einer Zwischenposition zwischen der Wegbegrenzungseinrichtung (12, 13) platziert wird.

7. Verfahren zur Herstellung eines Drahtrads nach einem oder mehreren der vorangegangenen Ansprüche, wobei die äußere Oberfläche des röhrenförmigen Fortsatzes in einer Richtung weg von der Felge verjüngt wird.

8. Verfahren zur Herstellung eines Drahtrads nach einem oder mehreren der vorangegangen Ansprüche, wobei das Verankerungselement (5) einstückig mit dem Schaft bereitgestellt wird.

9. Drahtrad umfassend eine Felge (2) und eine Nabe (3), welche aneinander mittels einer Mehrzahl von Speichen (4a, 4b) befestigt sind, welche jeweils einen Schaft beinhalten, an dessen entgegengesetzten axialen Enden entsprechende Verankerungselemente (5, 6) angeordnet sind, welche geeignet sind, jeweils an der Nabe und an der Felge befestigt zu werden, und wobei das Element (5) zum Verankern an der Felge in einem an der Felge fixierten Sitz (20) aufgenommen ist mit der Fähigkeit begrenzter axialer Verlagerung in dem Sitz (20), **dadurch gekennzeichnet, dass** der Sitz einstückig auf der Felge in der Form eines im Wesentlichen röhrenförmigen Fortsatzes (21) derselben bereitgestellt ist und das Verankerungselement (5) mit einer Kopplung vom Zylinder/Kolben-Typ in einer abgedichteten Weise in dem röhrenförmigen Fortsatz aufgenommen ist, so dass die abgedichtete Kopplung bei der axialen Verlagerung erhalten bleibt.

10. Drahtrad nach Anspruch 9 und welches eines oder mehrere der Kennzeichen der Ansprüche 2 bis 8 enthält.

## Revendications

1. Procédé pour la fabrication d'une roue à rayons du type comprenant une jante (2) et un moyeu (3) fixés l'un à l'autre au moyen d'une pluralité de rayons (4a, 4b), chaque rayon incluant une tige, aux extrémités axiales opposées de laquelle sont agencés des éléments d'ancrage respectifs (5, 6) capables d'être fixés respectivement au moyeu et à la jante, et dans lequel l'élément (5) pour l'ancrage sur la jante est reçu dans un siège (20) fixé sur la jante avec capacité de déplacement axial limité dans ledit siège (20), **caractérisé en ce que** ledit siège est prévu intégralement sur la jante sous la forme d'un appendice sensiblement tubulaire (21) de celle-ci, et ledit élément d'ancrage (5) est reçu de manière étanche avec accouplement du type à piston-et-cylindre, dans ledit appendice tubulaire, de sorte que ledit accouplement étanche est maintenu dans ledit déplacement axial.

2. Procédé pour la fabrication d'une roue à rayons selon la revendication 1, dans lequel ledit appendice tubulaire (21) est obtenu par déformation localisée et perçage de ladite jante (2) au niveau d'un canal (22) de celle-ci.

3. Procédé pour la fabrication d'une roue à rayons selon la revendication 2, dans lequel ladite déformation et ledit perçage sont effectués en même temps en perçant ladite jante avec un embout à fusion.

4. Procédé pour la fabrication d'une roue à rayons selon la revendication 1, 2 ou 3, dans lequel des moyens de limitation de course (12, 13) pour ledit accouplement à piston-et-cylindre sont prévus sur ledit élément d'ancrage.

5. Procédé pour la fabrication d'une roue à rayons selon l'une ou plusieurs des revendications 1 à 4, dans lequel ledit élément d'ancrage comprend un tenon cylindrique (10) capable de coulisser axialement et de manière étanche aux gaz dans ledit siège (20), l'étanchement vis-à-vis des gaz étant obtenu au moyen d'au moins une bague d'étanchement (15) interposée entre le tenon et le siège.

6. Procédé pour la fabrication d'une roue à rayons selon la revendication 5, dans lequel ladite bague d'étanchement (15) est placée dans une position intermédiaire entre les moyens de limitation de course (12, 13).

7. Procédé pour la fabrication d'une roue à rayons selon l'une ou plusieurs des revendications précédentes, dans lequel la surface extérieure dudit appendice tubulaire est effilée dans une direction en éloignement de la jante.

8. Procédé pour la fabrication d'une roue à rayons selon l'une ou plusieurs des revendications précédentes, dans lequel ledit élément d'ancrage (5) est prévu de manière intégrale avec ladite tige.

9. Roue à rayons incluant une jante (2) et un moyeu (3) fixés l'un à l'autre au moyen d'une pluralité de rayons (4a, 4b) qui incluent chacun une tige aux extrémités axiales opposées de laquelle sont agencés des éléments d'ancrage respectifs (5, 6) capables d'être fixés respectivement sur le moyeu et sur la jante, et dans laquelle l'élément (5) pour l'ancrage sur la jante est reçu dans un siège (20) fixé sur la jante avec capacité de déplacement axial limité dans ledit siège (20), **caractérisé en ce que** ledit siège est prévu intégralement sur la jante (2) sous la forme d'un appendice tubulaire (21) de celle-ci, et ledit élément d'ancrage est reçu de manière étanche avec accouplement du type à piston-et-cylindre dans ledit appendice tubulaire, de sorte que ledit accouplement étanche est maintenu dans ledit déplacement axial.

10. Roue à rayons selon la revendication 9, incluant l'une ou plusieurs des caractéristiques des revendications 2 à 8.
